(19) Europäisches Patentamt / European Patent Office / Office européen des brevets

(11) **EP 4 228 183 B1**

(12) **EUROPEAN PATENT SPECIFICATION**

(45) Date of publication and mention of the grant of the patent:
**29.07.2026 Bulletin 2026/31**

(21) Application number: **23170302.6**

(22) Date of filing: **30.09.2011**

(51) International Patent Classification (IPC):
**H04L 1/18** (2023.01)

(52) Cooperative Patent Classification (CPC):
**H04L 1/1858; H04L 1/1861; H04L 5/001; H04L 5/0055**

(54) **METHOD AND APPARATUS FOR TRANSMITTING ACK/NACK FEEDBACK INFORMATION**

VERFAHREN UND VORRICHTUNG ZUR ÜBERTRAGUNG VON ACK/NACK-RÜCKKOPPLUNGSINFORMATIONEN

PROCÉDÉ ET APPAREIL DE TRANSMISSION D'INFORMATIONS DE RÉTROACTION ACK/NACK

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2010 CN 201010517313**

(43) Date of publication of application:
**16.08.2023 Bulletin 2023/33**

(62) Document number(s) of the earlier application(s) in accordance with Art. 76 EPC:
**11833810.2 / 2 632 070**

(73) Proprietor: **Datang Mobile Communications Equipment Co., Ltd.**
**Beijing 100085 (CN)**

(72) Inventors:
• **GAO, Xuejuan**
  **Beijing, 100191 (CN)**
• **SHEN, Zukang**
  **Beijing, 100191 (CN)**
• **LIN, Yanan**
  **Beijing, 100191 (CN)**

(74) Representative: **Studio Torta S.p.A.**
**Via Viotti, 9**
**10121 Torino (IT)**

(56) References cited:
• **QUALCOMM INC: "Mapping Table for Format 1b with Channel Selection in case of CA", 3GPP DRAFT; R1-105556 ACKNACK MAPPING TABLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an, China; 20101011 - 201010, 5 October 2010 (2010-10-05), XP050598754**
• **NOKIA SIEMENS NETWORKS ET AL: "HARQ-ACK and RI multiplexing on PUSCH with SU-MIMO", 3GPP DRAFT; R1-105536, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 6 October 2010 (2010-10-06), XP050450750**

**Description**

**Field of the Invention**

The present invention relates to the field of communication technology, in particular to a method and an apparatus for transmitting ACK/NACK feedback information.

**Background of the Present Invention**

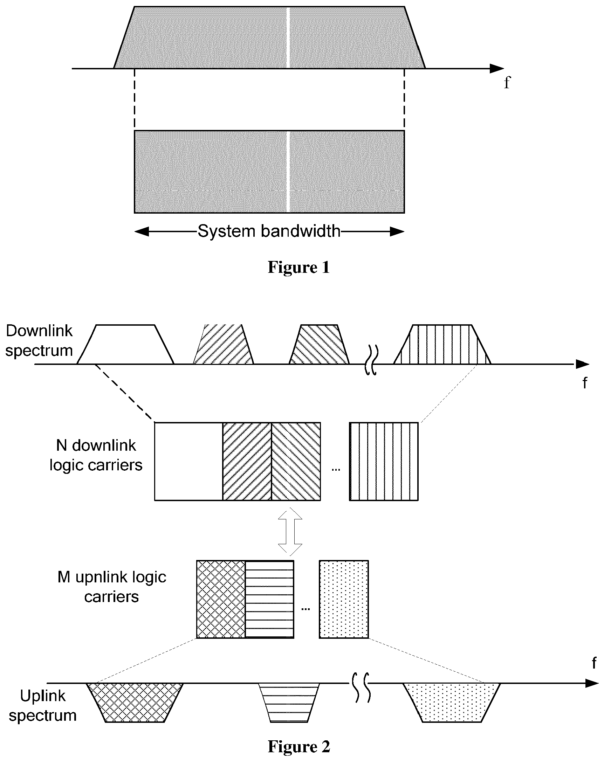

For LTE-A (Long Term Evolution Advanced), to support system bandwidths wider than LTE (Long Term Evolution), for example 100MHz, one possibility is to directly assign a frequency spectrum with a bandwidth of 100M as shown in Figure 1. The other possibility is to aggregate some spectra assigned to the present systems so as to form large bandwidths for long-term evolution multicarrier systems. Uplink and downlink carriers in the system may be arranged asymmetrically at this time, that is to say, a user will conduct downlink transmission through occupying N≥1 carriers and uplink transmission through occupying M≥1 carriers as shown in Figure 2.

An LTE-A system can support 5 carriers at most to aggregate at present. An LTE-A user equipment (UE) needs to feed back information on Acknowledgement (ACK)/Negative Acknowledgement (NACK) of a plurality of downlink carriers and downlink subframes in the same uplink subframe. In the LTE-A system, a transmission scheme of PUCCH (Physical Uplink Control Channel) Format 1b with channel selection can be adopted for ACK/NACK feedback information less than 4 bits. For an FDD (Frequency Division Duplex) system, the typical application scene of this scheme refers to as the aggregation of 2 carriers.

PUCCH Format 1b with channel selection differentiates different statuses of ACK/NACK feedback information through selecting and transmitting among a plurality of channel resources via a UE. ACK/NAK mapping table is used to realize the mapping among ACK/NACK feedback information to be fed back, actual channel transmission information (namely 4 constellation points modulated by PUCCH format 1b QPSK), and transmission channels. For ACK/NACK feedback with 2, 3 and 4 bits, 2, 3 and 4 uplink control channel resources are required respectively.

In an LTE system, all channel resources used for ACK/NACK transmission through PUCCH Format 1b with channel selection are implicit channel resources. The implicit channel resources means uplink control channel resources reserved in control information areas of a fixed downlink carrier corresponding to an uplink carrier. The minimum unit of the control information area is a CCE (Control Channel Element). UE can acquire an available uplink control channel resource through a minimum CCE number of each downlink control signaling sent on the downlink carrier. Such uplink contorl channel resource is abbreviated as "an implicit channel resource" or "a dynamic channel resource".

In an LTE-A system, implicit channel resources on each UL CC (Uplink Component Carrier) are reserved only for a PDCCH (Physical Downlink Control Channel) on a DL CC (Downlink Component Carrier) paired with the UL CC, while the PUCCH can be sent only on a UL PCC (Uplink Primary Component Carrier). Thus for a certain UE, implicit channel resources only exist on a UL PCC. In consideration that the UL PCC reserves resources only for a DL PCC (Downlink Primary Component Carrier), implicit channel resources only can be obtained from the PDCCH sent on a DL PCC. Thus not all channel resources required for PUCCH format 1b with channel selection are necessarily acquired from implicit channel resources.

It is necessary to design a new ACK/NACK mapping table in the LTE-A system to meet the following requirements:

(1) Try to use the implicit resources reserved on the UL PCC to reduce the consumption on uplink control channel resources;

(2) Be applicable to cross-carrier scheduling and non-cross-carrier scheduling simultaneously to reduce standard complexities;

(3) Avoid such a many-to-one ambiguous state in an ACK/NACK mapping table in the LTE system;

(4) Be capable of solving the ambiguities during DL CC reconfiguration or when data packet scheduling only exists on a DL PCC, that is to say, a fallback to the PUCCH format 1a/1b transmission method in LTE Rel-8 can be implemented when a UE receives data packet transmission only on the DL PCC (perferably, a base station sends the downlink data of a subframe only on the DL PCC during DL CC reconfiguration; or a UE is configured with a plurality of DL CCs, while the base station schedules data packets of a subframe only on the DL PCC). Meanwhile, it is necessary to ensure that QPSK constellation points and channel resources used for ACK/NACK transmission through a PUCCH format 1b with channel selection scheme are consistent with QPSK modulation symbols (or named constellation points) and channel resources used by ACK/NACK corresponding to the transmission of a data packet on the primary carrier by PUCCH format 1a/1b.

When an LTE-A Rel-10 system supports the fallback of Rel-8 PUCCH format 1a/1b transmission, the inconformity between a UE and an eNB (an evolved NodeB, namely a base station) on a transmission scheme actually adopted by the UE should be solved, which comprises:
Condition 1: When an effective time of an eNB is different from that of a UE during DL CC reconfiguration, the inconformity between the eNB and and UE with respect to the quantity of configured DL CCs may exist.

For example, when the quantity of CCs reduces from two to one during DL CC reconfiguration, an eNB schedules one codeword on a DL PCC and expects to adopt PUCCH format 1a on the UL PCC (FDD system: transmission with single codeword or a plurality of codewords with one scheduled codeword; or TDD system: transmission with single codeword or a plurality of codewords with one scheduled codeword) to receive one-bit ACK/NACK feedback information or adopt PUCCH format 1b (FDD system: transmission with a plurality of codewords with two simultaneously scheduled codewords; or TDD system: transmission with a plurality of codewords with two simultaneously scheduled codewords) to receive two-bit ACK/NACK feedback information.

However, before taking into effect, the UE will still work under 2DL CC configuration, generate ACK/NACK feedback bits according to 2CC configuration and adopt a PUCCH format 1b with channel selection scheme on a UL PCC to transmit ACK/NACK feedback information. If QPSK modulation symbols and transmission channels determined after channel selection by a UE are inconsistent with PUCCH format 1a/1b, an eNB cannot receive ACK/NACK information correctly. On the contrary, when the quantity of CC increases from one to two during DL CC reconfiguration, the inconformity mentioned above will still exist.

Condition 2: When a UE is configured with a plurality of DL CCs, while an eNB only schedules on a DL PCC, the inconformity between the eNB and the UE on the the actual transmission scheme of the UE will exist.

For example, when an eNB only schedules the data packet transmission of a subframe on a DL PCC, the eNB expects to adopt PUCCH format 1a (single-codeword scheduling)/1b (multi-codeword sheduling) on the UL PCC to receive ACK/NACK feedback information.

However, UE is configured to work on two DL CCs. Thus regardless of the quantity of DL CC where a UE receives data packets, the UE will generate ACK/NACK feedback bits according to 2CC configuration and adopt a PUCCH format 1b with channel selection scheme to transmit ACK/NACK feedback information on a UL PCC. If QPSK modulation symbols and transmission channels determined after channel selection by the UE are inconsistent with PUCCH format 1a/1b, an eNB cannot receive ACK/NACK information correctly.

To solve the above problems, it is necessary to ensure that ACK/NACK mapping table design meets the condition that transmisson channels and modulation symbols corresponding to ACK/NACK feedback status during downlink tranmission of a subframe on a DL PCC should coincide with PUCCH format 1a/1b.

In the mapping table of 2-bit ACK/NACK of an FDD system as shown in Table 1, two channel resources are used to operate channel selection and a fallback of PUCCH format 1b cannot be supported (that is to say, the selected channels may be inconsistent with PUCCH format 1b, for example, when channel 2 is selected). While a fallback of PUCCH format 1a can be supported in two statuses with background shade (that is to say, QPSK symbols and the selected channels are consistent with PUCCH format 1a).

## Table 1 Mapping Table of 2-bit ACK/NACK Feedback Information

| ACK/NACK feedback status | | Channel 1 ( $n^{(1)}_{PUCCH,0}$ ) | | Channel 2 ( $n^{(1)}_{PUCCH,1}$ ) | |
|---|---|---|---|---|---|
| DL PCC | DL SCC | RS | Data | RS | Data |
| A | A | | | 1 | -1 |
| A | N/DTX | 1 | -1 | | |
| N/DTX | A | | | 1 | 1 |
| N | N/DTX | 1 | 1 | | |

In the mapping table of 3-bit ACK/NACK of an FDD system as shown in Table 2, the parts with background shade refers to mapping methods for DL PCC in multi-codeword mode. At this time, a fallback of PUCCH format 1b can be supported in 4 statuses with background shade (that is to say, QPSK symbols and the selected channels are consistent with PUCCH format 1b), while a fallback of PUCCH format 1a cannot be supported (that is to say, QPSK symbols and the selected channels are inconsistent with PUCCH format 1a); the bold parts refer to mapping methods for DL PCC in a single-codeword mode. At this time, two statuses in bold can support a fallback of PUCCH format 1a (that is to say, QPSK symbols and the selected channels are consistent with PUCCH format 1a).

Table 2 Mapping Table of 3-bit ACK/NACK Feedback Information

| ACK/NACK feedback status | | Channel 1 ($n_{PUCCH,0}^{(1)}$) | | Channel 2 ($n_{PUCCH,1}^{(1)}$) | | Channel 3 ($n_{PUCCH,2}^{(1)}$) | |
|---|---|---|---|---|---|---|---|
| DL PCC (multi-codeword) or **DL SCC(multi-codeword)** | DL SCC(single codeword) or **DL PCC (single codeword)** | RS | Data | RS | Data | RS | Data |
| … | … | | | | | | |
| A,A | DTX | 1 | -1 | | | | |
| A,N | DTX | 1 | j | | | | |
| N,A | DTX | 1 | -j | | | | |
| N,N | DTX | 1 | 1 | | | | |
| **DTX** | **A** | | | | | 1 | -1 |
| **DTX** | **N** | | | | | 1 | 1 |
| … | … | | | | | | |

In the mapping table of 4-bit ACK/NACK of an FDD system as shown in Table 3, the mapping methods are for DL PCC in a multi-codeword mode. At this time, a fallback of PUCCH format 1b can be supported in four statuses in bold (that is to say, QPSK symbols and the selected channels are consistent with PUCCH format 1b); while a fallback of PUCCH format 1a cannot be supported (that is to say, QPSK symbols and the selected channels are inconsistent with PUCCH format 1a).

Table 3 Mapping Table of 4-bit ACK/NACK Feedback Information

| ACK/NACK feedback status | | **Channel 1 ($n_{PUCCH,0}^{(1)}$)** | | **Channel 2 ($n_{PUCCH,1}^{(1)}$)** | | **Channel 3 ($n_{PUCCH,2}^{(1)}$)** | | **Channel 4 ($n_{PUCCH,4}^{(1)}$)** | |
|---|---|---|---|---|---|---|---|---|---|
| DL PCC | DL SCC | RS | Data | RS | Data | RS | Data | RS | Data |
| ... | ... | | | | | | | | |
| **A,A** | **DTX** | **1** | **-1** | | | | | | |
| **A,N** | **DTX** | **1** | **j** | | | | | | |
| **N,A** | **DTX** | **1** | **-j** | | | | | | |
| **N,N** | **DTX** | **1** | **1** | | | | | | |
| ... | ... | | | | | | | | |

Wherein, the character A in Table 1, Table 2 and Table 3 represents ACK, and the character N represents NACK.

The feedback information of a downlink carrier corresponding to a UE includes ACK (correctly-received data packets), NACK (incorrectly-received data packets) and DTX (Discontinuous Transmission, namely lost or non-scheduled data packets).

At present, ACK/NACK feedback information bits fed back by a UE is determined based on the configured downlink carriers and transmission modes of each downlink carrier in the LTE-A FDD system, that is to say, it is necessary for the UE to feed back ACK/NACK with $\sum_{i=1}^{N} C_i \cdot N$ bits on an uplink subframe, where $C_i$ represents the codeword quantity of each downlink carrier (C=1 during the single-codeword transmission and C=2 during the multi-codeword transmission), different transmission modes (namely codeword quantity) can be used for different downlink carriers), and N represents the quantity of downlink carriers configured for the UE.

For an FDD system, when the multi-codeword transmission mode is used for a DL CC, namely MIMO (Multiple-Input Multiple-Out-put) tranmission mode, it is necessary for a UE to seperately generate ACK/NACK feedback information with 1 bit, no matter 2-codeword are scheduled or not on the DL CC actually. For the DL CC with only one-codeword transmission in the MIMO tranmission mode, it is necessary for the UE to generate a supposed ACK/NACK feedback status for the second codeword so as to meet the total quantity as $\sum_{i=1}^{N} C_i$ of ACK/NACK bits fed back by the UE.

In the LTE Rel-8 system, the UE generates NACK information for non-scheduled data packets/codeword positions.

During implementation of the embodiments of the present invention, Inventors found out that the following problems at least exist in the related art:

In LTE-A Rel-10 system, when the MIMO transmission mode is configured on PCC for a UE, while only one-codeword is scheduled on a DL PCC actually, a fallback of PUCCH format 1a should be supported to transmit 1-bit ACK/NACK. In PUCCH format 1a, an ACK feedback status corresponds to the modulation symbol "-1", and an NACK feedback status corresponds to the modulation symbol "1". If NACK information is generated in the non-scheduled codeword position in accordance with the LTE Rel-8 mode, the corresponding transmission symbol refers to "j" as shown in Table 1 and Table 2 rather than "-1" corresponding to PUCCH format 1a when the UE receives a codeword only on a DL PCC and ACK/NACK feedback information corresponding to the DL PCC generated by the UE refers to [A,N]. Therefore, a fallback of PUCCH format 1a cannot be realized.

At present, there are no effective technical solutions in the related art. A known method is disclosed in QUALCOMM INC: "Mapping Table for Format 1b with Channel Selection in case of CA", 3GPP DRAFT; R1-105556 (2010-10-05).

## Summary of the Invention

In one aspect, the present disclosure provides in some embodiments a method for transmitting multi-bit ACK/NACK feedback information using PUCCH Format 1b with channel selection according to claim 1.

In another aspect, the present disclosure provides in some embodiments a UE according to claim 8.

In yet another aspect, the present disclosure provides in some embodiments a computer-readable storage medium according to claim 15.

Preferred embodiments of the claims are part embodiments of the invention are the subject matter of the dependent claims, whose content is to be understood as forming an integral part of the present description.

## Brief Description of the Drawings

Figure 1 is a schematic diagram of a single spectrum system in the related art;

Figure 2 is a schematic diagram of a spectrum aggregation system in the related art;

Figure 3 is a flow diagram of a method for transmitting ACK/NACK feedback information proposed by the embodiments of the present invention;

Figure 4 is a flow diagram of a method for transmitting ACK/NACK feedback information in application scene I proposed by the embodiments of the present invention;

Figure 5 is a flow diagram of a method for transmitting ACK/NACK feedback information in application scene II proposed by the embodiments of the present invention;

Figure 6A is a flow diagram of a method for transmitting ACK/NACK feedback information in application scene III proposed by the embodiments of the present invention;

Figure 6B is a flow diagram of a method for transmitting ACK/NACK feedback information in application scene IV proposed by the embodiments of the present invention;

Figure 7 is a flow diagram of a method for transmitting ACK/NACK feedback information in application scene V proposed by the embodiments of the present invention;

Figure 8 is a flow diagram of a method for transmitting ACK/NACK feedback information in application scene VI proposed by the embodiments of the present invention;

Figure 9 is a flow diagram of a method for transmitting ACK/NACK feedback information in application scene VII proposed by the embodiments of the present invention;

Figure 10 is a structure diagram of a UE proposed by the embodiments of the present invention.

**Detailed Description of Preferred Embodiments**

As shown in the background, in the LTE-A (CA, carrier aggregation) system, PUCCH Format 1b with channel selection is determined as a scheme for ACK/NACK multiplexing transmission at present.

When a UE is scheduled only on a downlink main component carrier, an LTE-A system can fall back to a method for transmitting ACK/NACK with single carrier in an LTE Rel-8 system, which is equivalent to transmit ACK/NACK by PUCCH format 1a/1b.

To meet the demands for backward compatibility, it is necessary to design a new ACK/NACK mapping table for an LTE-A system. The table should meet the condition that in a DTX status of data packets on a DL SCC, modulation symbols actually transmitted by PUCCH format 1b with channel selection and the used transmission channels are consistent with PUCCH format 1a/1b, so as to prevent the inconsistence of detection results between a UE and an eNB.

In consideration that two transmission modes with single codeword and multiple codewords may be configured for a DL PCC, it is necessary to generate ACK/NACK on the DL PCC based on different DL PCC transmission modes so as to realize a fallback.

Based on the above reasons, the embodiments of the present invention provide a method for transmitting ACK/NACK feedback information based on an ACK/NACK mapping table with PUCCH format 1b with channel selection scheme.

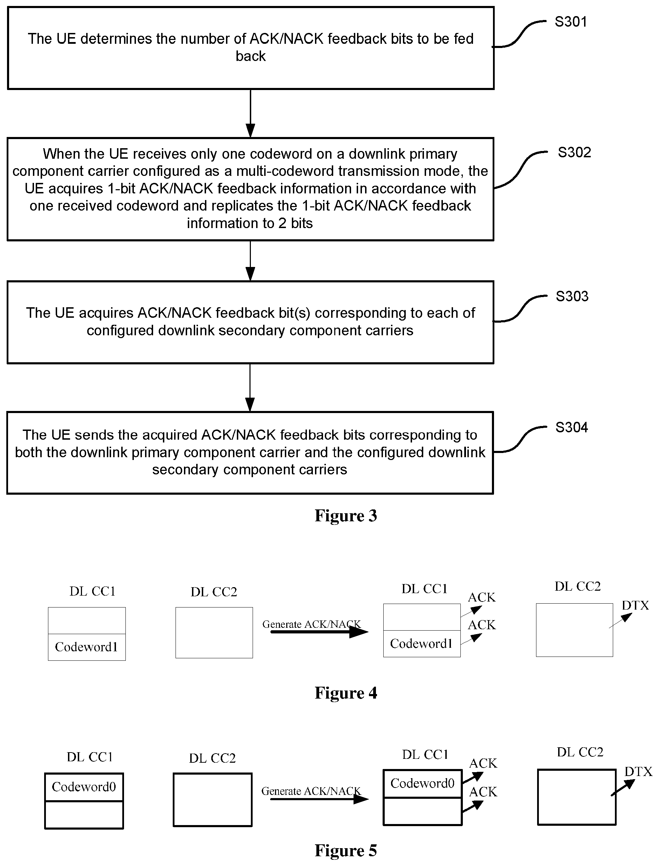

Figure 3 is a flow diagram of a method for transmitting ACK/NACK feedback information proposed by the embodiments of the present invention, which comprises the following steps:

Step S301: a UE determines the quantity of ACK/NACK feedback bits to be fed back.

This step is mainly used to ensure the consistency of bit quantity of ACK/NACK feedback information to be fed back at a UE side and at a network side, thus avoiding inconsistent information at two sides.

In this step, the following two conditions exist in a specific realization procedure according to the system type differences:

(1) For an FDD system, a UE determines the quantity of ACK/NACK feedback bits to be fed back by the UE in accordance with the quantity of the configured downlink component carriers and the transmission mode of each of the configured downlink component carriers.

(2) For a TDD system, a UE determines the quantity of ACK/NACK feedback bits to be fed back by the UE in accordance with the quantity of the configured downlink component carriers, the quantity of downlink subframes of ACK/NACK feedback bits to be fed back corresponding to an uplink subframe, and the transmission mode of each of the configured downlink component carriers.

It should be noted that in practical application, a UE determines the quantity of ACK/NACK feedback bits to be fed back after the configuration or reconfiguration of transmission modes of downlink component carriers and downlink component carriers of each configuration. This quantity keeps unchanged after the determination step. That is to say, the UE always feeds back in accordance with the previously determined quantity of ACK/NACK feedback bits, unless when the signaling for reconfiguring the quantity of downlink carriers or transmission modes of downlink component carriers received by the UE becomes effective, the quantity of of ACK/NACK feedback bits to be fed back will be redetermined.

Step S302: in the condition that the UE receives one codeword on a downlink primary component carrier configured as a multi-codeword transmission mode, the one codeword on the downlink primary component carrier being one and only code received by the UE, the UE acquires 1-bit ACK/NACK feedback information in accordance with one received codeword on the downlink primary component carrier, and replicates such 1-bit ACK/NACK feedback information to 2 bits, as ACK/NACK feedback bits corresponding to the downlink primary component carrier .

Here, the one codeword includes one-codeword transmission of dynamic scheduling and PDCCH transmission indicating downlink semi-persistent scheduling (SPS) resource release, that is to say, when the UE only receives a PDCCH indicating downlink SPS resource release on the downlink primary component carrier configured with the multi-codeword transmission mode, the codeword mentioned above is equivalent to such PDCCH. The UE receives 1-bit ACK/NACK feedback information of the PDCCH which indicates downlink SPS resource release, and replicates the 1-bit ACK/NACK feedback information to 2 bits as ACK/NACK feedback bits corresponding to the downlink primary component carrier.

Here, a dynamic channel resource corresponding to the codeword (including PDCCH which indicates downlink SPS resource release) received by the UE is taken as the dynamic channel resource corresponding to the downlink primary component carrier in each channel resource used for channel selection by the UE. Preferably, when downlink primary component carrier is configured in the multi-codeword transmission mode, the dynamic channel resource is regarded as the first channel resources $n_{PUCCH,0}^{(1)}$ in the ACK/NACK mapping table.

In specific application scene, the aforementioned dynamic channel resource refers to one channel resource on an uplink primary carrier determined by UE in accordance with a minimum CCE number of a PDCCH. The PDCCH is used to schedule one codeword (including the PDCCH that indicates downlink SPS resource release) received by the UE on the downlink primary component carrier, and transmitted on the downlink primary component carrier of the UE.

It should be noted that DCI format 2/2A/2B/2C or DCI format 1A can be used to transmit a PDCCH when one codeword is scheduled on a downlink primary component carrier. The changes on specific types will not affect the protective scope of the present invention.

It can be seen from the above methods and in combination with the aforementioned Table 2 and Table 3 that the copied ACK/NACK feedback information can ensure that QPSK modulation symbols and channel resources corresponding to ACK/NACK feedback statuses are consistent with PUCCH format 1a when PUCCH format 1b with channel selection is adopted, thus avoiding inconsistent information between the UE side and the network side.

When the UE receives two codewords on the downlink primary component carrier configured as the multi-codeword mode at the same time, because inconsistent information will not occur, the UE will process in accordance with existing technical solution directly and acquire ACK/NACK feedback information corresponding to two scheduled codewords separately.

It needs to be noted that in the procedure, the multi-codeword ACK/NACK feedback information is generated without spatial bundling.

Step S303: UE acquires the ACK/NACK feedback bits corresponding to each of configured downlink secondary component carrier(s).

Here, a sum of the quantity of ACK/NACK feedback bits corresponding to each of the configured downlink secondary component carrier(s) and 2-bit ACK/NACK feedback bits corresponding to the downlink primary component carrier is equal to the quantity of ACK/NACK feedback bits to be fed back by the UE determined in step S301.

This step can ensure the consistency of the quantity of ACK/NACK feedback bits to be fed back between the UE and the network side.

In this step, ACK/NACK feedback bits are to be generated by the following two methods:

Method I. procedure in accordance with the related art

NACK or DTX feedback bits are generated by the UE for one or more downlink secondary component carrier(s) which have been configured but have not received any codeword(s).

Specifically, 2-bit NACK or DTX is generated as feedback information for downlink secondary component carrier(s) which are transmitted in the multi-codeword mode; 1-bit NACK or DTX feedback information is generated for downlink secondary component carrier(s) which are transmitted in the single-codeword mode.

Method II. replicate ACK/NACK feedback information

As similar to Step S302, when UE receives only one codeword on downlink secondary component carrier(s) configured as the multi-codeword transmission mode, such a UE will acquire 1-bit ACK/NACK feedback information corresponding to each of the configured downlink secondary component carrier(s) and replicates such information to 2 bits as ACK/NACK feedback bits corresponding to the downlink secondary component carrier(s).

It needs to be noted that in the procedure, multi-codeword ACK/NACK feedback information is generated without spatial bundling.

Step S304: the UE sends the acquired ACK/NACK feedback bits corresponding to both the downlink primary component carrier and the configured downlink secondary component carrier(s).

The UE determines one channel resource and corresponding modulation symbols among candidate channel resources according to the acquired ACK/NACK feedback bits corresponding to each of configured downlink component carriers with a PUCCH format 1b with channel selection scheme.

The UE sends corresponding modulation symbols on the one determined channel resource.

Here, the candidate channel resources at least include one dynamic channel resource corresponding to a PDCCH for scheduling downlink primary component carrier, wherein, the PDCCH refers to the one PDCCH for scheduling one codeword received on the downlink primary component carrier or indicating dowlink SPS resource release.

Preferably, the dynamic channel resource corresponds to a minimum CCE number of the PDCCH, that is to say, such resource is determined in accordance with a minimum CCE number of the PDCCH.

Preferably, the UE takes the one dynamic channel resource corresponding to a minimum CCE number of the PDCCH as the first dynamic channel resource corresponding to the downlink primary component carrier among the candidate channel resources used for channel selection, that is to say, the UE takes the dynamic channel resource as the first channel resource among the candidate channel resources used for channel selection.

In a specific application scene, the dynamic channel resource corresponds to a minimum CCE number of the PDCCH.

Compared with related art, the embodiments of the present invention have the following advantages:
The ACK/NACK feedback information can be transferred based on ACK/NACK mapping table through PUCCH format 1b with channel selection scheme upon applying technical solutions of the embodiments of the present invention to avoid inconsistent results detected due to inconformity on transmission scheme between the base station and the UE in the procedure of feeding back ACK/NACK feedback information to further realize fallback of LTE Rel-8 PUCCH format 1a/1b.

The technical solutions put forward by the embodiments of the present invention will be explained in combination with actual application scenes.

In an LTE-A system, for a UE for which a plurality of downlink carriers are configured, when the UE feeds back M-bit ACK/NACK information with PUCCH Format 1b with channel selection, $2 \leq M \leq 4$ will be met, where M refers to a positive integer. If the multi-codeword transmission mode is adopted for downlink primary component carriers and only one codeword is scheduled and transmitted (including that the transmission of one PDCCH indicating SPS resource release only exists), the transmission procedure of ACK/NACK feedback information by the UE is as follows:

(1) Firstly, the UE acquires one codeword scheduled on a DL PCC configured as the multi-codeword transmission mode or 1-bit ACK/NACK feedback information corresponding to a PDCCH indicating SPS resource release, and replicates such 1-bit ACK/NACK feedback information to 2 bits. The resultant 1-bit ACK/NACK feedback information by replication indicates ACK/NACK feedback information of a non-scheduled codeword.

Here, the implicit (dynamic) channel resource corresponding to a codeword received on a DL PCC is taken as the channel resource corresponding to the DL PCC among M channel resources used for channel selection with PUCCH Format 1b with channel selection, wherein the implicit channel resource corresponding to the codeword received on the DL PCC refers to an implicit channel resource on the UL PCC determined in accordance with the minimum CCE number of the PDCCH scheduling the transmission of such codeword on the DL PCC (if a DL PCC corresponds to two implicit channel resources, the implicit channel resource determined in accordance with the minimum CCE number of the PDCCH refers to the first channel resource corresponding to the DL PCC, namely $n_{PUCCH,0}^{(1)}$ . The DCI format 2/2A or DCI format 1A can be adopted for the PDCCH scheduling the transmission of such codeword on DCL PCC.

In the procedure, the multi-codeword ACK/NACK feedback information is generated without spatial bundling.

Moreover, when two codewords on a DL PCC are scheduled simultaneously, the UE acquires ACK/NACK feedback information of each codeword separately based on actual reception (in terms of Rel-8).

(2) the UE acquires (M-2) bit ACK/NACK feedback information corresponding to each of configured DL SCCs, where M refers to the quantity of ACK/NACK feedback bits determined by the UE in accordance with the configuration, and meets the condition, $2 \leq M \leq 4$. Supposing that N ($N \geq 2$) refers to the quantity of DL CCs configured for the UE, the quantity of DL SCCs during the prosedure is N-1.

In the procedure, the multi-codeword ACK/NACK feedback information is generated without spatial bundling.

In the procedure, the method for determining the quantity of ACK/NACK feedback bits by the UE is as follows:
In the case of an FDD system, the UE determines the quantity of ACK/NACK feedback bits to be fed back by the UE in accordance with the quantity of configured downlink component carriers and transmission mode of each of the configured downlink component carriers.

In the case of a TDD system, the UE determines the quantity of ACK/NACK feedback bits to be fed back by the UE in accordance with the quantity of configured downlink component carriers, the quantity of downlink subframes of ACK/NACK feedback bits to be fed back by the UE corresponding to an uplink subframe, and transmission mode of each of the configured downlink component carriers.

Moreover, as similar to the above conditions, the generation of ACK/NACK feedback information in the procedure includes the following two situations:

A. In accordance with the related art, when a UE cannot receive downlink data packets on a DL SCC, the UE will generate ACK/NACK feedback information of each codeword on the DL SCC as a NACK or DTX status.

B. In accordance with the procedure similar to a DL PCC, when the DL SCC is configured as a multi-codeword mode and the UE receives only one codeword, the same scheme as the one for generating ACK/NACK on the DL PCC can be adopted, that is to say, 1-bit ACK/NACK feedback information of one received codeword is replicated as ACK/NACK feedback information of the non-scheduled codeword.

(3) The UE sends M-bit ACK/NACK feedback information to be fed back with a PUCCH format 1b with channel selection scheme.

The procedure includes the following steps. UE selects a channel resource during actual transmission and a transmission modulation symbol (four QPSK constellation points of PUCCH format 1b) for the M-bit ACK/NACK feedback information to be fed back according to an M-bit ACK/NACK mapping table with a PUCCH format 1b with channel selection scheme, and sends corresponding modulation symbols on the corresponding channel resources.

Preferably, the aforementioned scheme is applicable to an FDD system, and an uplink subframe where ACK/NACK feedback of only one downlink subframe is conducted on a carrier in a TDD system.

In specific application scenes, the design of an ACK/NACK mapping table applied in the technical solution can be optimized based on 2DL CCs.

Furthermore, in combination with the following specific application scenes, the application procedure of the aforementioned technical solution is described as followings:

Application scene I: During a DL CC reconfiguration, two DL CCs to one DL CC is reconfigured for a UE. As shown in the scene of Figure 4, two DL CCs are configured for the UE initially. DL CC1 refers to a DL PCC, which is transmitted in a multi-codeword mode. DL CC2 refers to a DL SCC, which is transmitted in a single-codeword mode. An eNB only schedules the codeword 1 through a PDCCH using DCI format 2, DCI format 2A, DCI format 2B or DCI format 2C on a DL PCC. Transmission procedure of ACK/NACK is as follows:

UE side: Within the period that reconfiguration is not effective, a UE still runs based on the configuration of two DL CCs and transmitts ACK/NACK with a PUCCH format 1b with channel selection scheme, that is to say, the UE determines that it is necessary to feed back 3-bit ACK/NACK in accordance with the configuration of two DL CCs and the transmission mode of each of the two DL CCs; ACK/NACK feedback information of codeword 1 acquired by the UE on the DL PCC refers to ACK, then such information is replicated as the feedback information of the non-scheduled codeword 0, that is to say, the feedback information corresponding to codeword 0 also refers to ACK; if the UE cannot detect data packets on the DL SCC, ACK/NACK feedback information generated for the DL SCC refers to DTX and 3-bit ACK/NACK feedback information to be fed back that is generated by the UE finally refers to [ACK, ACK, DTX]; the UE determines the implicit channel resource on a UL PCC through a minimum CCE number of the PDCCH on the DL PCC which is used to schedule the codeword 1, such implicit channel resource is taken as the implicit channel resource corresponding to the DL PCC in an ACK/NACK mapping table, namely the first channel resource, $n_{PUCCH,0}^{(1)}$ as shown in Table 2; then the UE determines that the channel resource of ACK/NACK feedback information to be fed back refers to the first channel resource (namely the first implicit channel resource corresponding to the DL PCC) , and the corresponding modulation symbol of ACK/NACK feedback information to be fed back refers to "-1" in accordance with an ACK/NACK mapping table as shown in Table 2; finally, the UE sends the modulation symbol, "-1" on the implicit channel resource determined in accordance with the minimum CCE number of the PDCCH sheduling the codewrod 1;

Base station side: The base station only schedules the codeword 1 on the DL PCC, so the base station receives ACK/NACK feedback information with PUCCH format 1a; since channel resource of PUCCH format 1a refers to the implicit channel resource on the UL PCC corresponding to a minimum CCE number of the PDCCH scheduling the codeword 1 and modulation symbol corresponding to ACK in PUCCH format 1a refers to "-1". That is to say, the UE shares the same transmission channel and transmission modulation symbol with the base station actually, and inconsistency does not exist. Then the base station detects channel resource of PUCCH format 1a (namely the implicit channel resource on the UL PCC corresponding to a minimum CCE number of the PDCCH scheduling the codeword 1) and modulation symbol "-1" sent by the UE can be acquired, namely the feedback information ACK of codeword 1 sent by UE can be obtained.

Application scene II: During DL CC reconfiguration, two DL CCs to one DL CC is reconfigured for a UE. As shown in the scene of Figure 5, DL CC1 refers to a DL PCC, which is transmitted in a multi-codeword mode. DL CC2 refers to a DL SCC, which is transmitted in a single-codeword mode. An eNB only schedules codeword 0 through a PDCCH using DCI format 2, DCI format 2A, DCI format 2B or DCI format 2C or DCI format 1A on a DL PCC. Transmission procedure of ACK/NACK is as follows:

UE side: Within the period that reconfiguration is not effective, a UE still runs based on the configuration of two DL CCs and transmitts ACK/NACK with a PUCCH format 1b with channel selection scheme, that is to say, the UE determines that it is necessary to feed back 3-bit ACK/NACK in accordance with the configuration of two DL CCs and the transmission mode of each of the two DL CCs; ACK/NACK feedback information of codeword 0 acquired by the UE on the DL PCC refers to ACK, then such information is replicated as the feedback information of the non-scheduled codeword 1, that is to say, the feedback information corresponding to codeword 1 also refers to ACK; if the UE cannot detect data packets on the DL SCC, ACK/NACK feedback information generated for the DL SCC refers to DTX and 3-bit ACK/NACK feedback information to be fed back that is generated by the UE finally refers to [ACK, ACK, DTX]; the UE determines the implicit channel resource on a UL PCC through a minimum CCE number of the PDCCH on the DL PCC which is used to schedule the codeword 0, such implicit channel resource is taken as the implicit channel resource corresponding to the DL PCC in an ACK/NACK mapping table, namely the first channel resource, $n_{PUCCH,0}^{(1)}$ as shown in Table 2; then the UE determines that the channel resource of ACK/NACK feedback information to be fed back refers to the first channel resource (namely the first implicit channel resource corresponding to the DL PCC) ,and the corresponding modulation symbol of ACK/NACK feedback information to be fed back refers to "-1" in accordance with an ACK/NACK mapping table as shown in Table 2; finally, the UE sends the modulation symbol, "-1" on the implicit channel resource determined in accordance with the minimum CCE number of the PDCCH scheduling the codewrod 0;

Base station side: The base station only schedules the codeword 0 on the DL PCC, so the base station receives ACK/NACK feedback information with PUCCH format 1a; since the channel resource of a PUCCH format 1a refers to the implicit channel resource on the UL PCC corresponding to a minimum CCE number of the PDCCH scheduling the codeword 0 and the modulation symbol corresponding to ACK in PUCCH format 1a refers to "-1". That is to say, the UE shares the same transmission channel and transmission modulation symbol with the base station actually, and inconsistency does not exist. Then the base station detects channel resource of PUCCH format 1a (namely the implicit channel resource on the UL PCC corresponding to a minimum CCE number of the PDCCH scheduling the codeword 0) and modulation symbol "-1" sent by the UE can be acquired, namely the feedback information ACK of codeword 0 sent by the UE can be obtained.

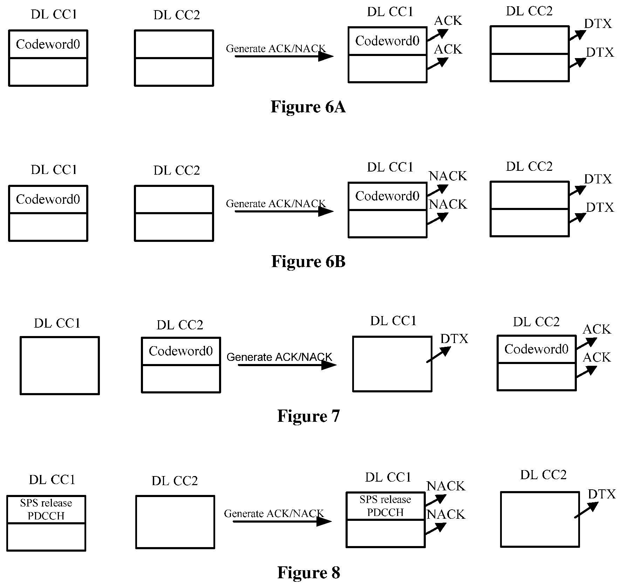

Application scene III: During a DL CC reconfiguration, two DL CCs to one DL CC is reconfigured for a UE. As shown in the scene of Figure 6A, two DL CCs are configured for the UE initially. DL CC1 refers to a DL PCC, which is transmitted in a multi-codeword mode. DL CC2 refers to a DL SCC, which is transmitted in a multi-codeword mode too. An eNB only schedules codeword 0 through a PDCCH using DCI format 2, DCI format 2A, DCI format 2B or DCI format 2C on a DL PCC. Transmission procedure of ACK/NACK is as follows:

UE side: Within the period that reconfiguration is not effective, a UE still runs based on the configuration of two DL CCs and transmitts ACK/NACK with a PUCCH format 1b with channel selection scheme, that is to say, the UE determines that it is necessary to feed back 4-bit ACK/NACK in accordance with the configuration of two DL CCs and the transmission mode of each of the two DL CCs; ACK/NACK feedback information of codeword 0 acquired by the UE on the DL PCC refers to ACK, then such information is replicated as the feedback information of the non-schedules codeword 1, that is to say, the feedback information corresponding to codeword 1 also refers to ACK; if the UE cannot detect data packets on the DL SCC, ACK/NACK feedback information generated for the DL SCC refers to 2 DTXs and 4-bit ACK/NACK feedback information generated by the UE finally refers to [ACK, ACK, DTX, DTX]; the UE determines the implicit channel resource on a UL PCC through a minimum CCE number of the PDCCH on the DL PCC which is used to schedule the codeword 0, such implicit channel resource is taken as the implicit channel resource corresponding to the DL PCC in an ACK/NACK mapping table, namely the first channel resource, $n_{PUCCH,0}^{(1)}$ as shown in Table 3; then the UE determines that the channel resource of ACK/NACK feedback information to be fed back refers to the first channel resource (namely the first implicit channel resource corresponding to the DL PCC) ,and the corresponding modulation symbol of ACK/NACK feedback information to be fed back refers to "-1" in accordance with an ACK/NACK mapping table; finally, the UE sends the modulation symbol, "-1" on the implicit channel resource determined in accordance with the minimum CCE number of the PDCCH scheduling the codewrod 0;

Base station side: A base station only schedule the codeword 0 on the DL PCC, so the base station receives ACK/NACK feedback information with PUCCH format 1a; since the channel resource of PUCCH format 1a refers to the implicit channel resource on the UL PCC corresponding to a minimum CCE number of the PDCCH scheduling the codeword 0 and modulation symbol corresponding to ACK in PUCCH format 1a refers to "-1", that is to say, the UE shares the same transmission channel and transmission modulation symbol with the base station actually, and inconsistency does not exist; the base station detects channel resource of PUCCH format 1a (namely, the implicit channel resource on the UL PCC corresponding to a minimum CCE number of the PDCCH scheduling the codeword 0) and modulation symbol "-1" sent by the UE can be acquired, namely, feedback information ACK of codeword 0 sent by the UE can be obtained.

Application scene IV: During a DL CC reconfiguration, two DL CCs to one DL CC is reconfigured for a UE. As shown in the scene of Figure 6B, DL CC1 refers to a DL PCC, which is transmitted in a multi-codeword mode. DL CC2 refers to a DL SCC, which is transmitted in a multi-codeword mode. An eNB only schedules codeword 0 on DL PCC through a PDCCH using DCI format 1A. Transmission procedure of ACK/NACK is as follows:

UE side: Within the period that reconfiguration is not effective, a UE still runs based on the configuration of two DL CCs and transmitts ACK/NACK with a PUCCH format 1b with channel selection scheme, that is to say, the UE determines that it is necessary to feed back 4-bit ACK/NACK in accordance with the configuration of two DL CCs and the transmission mode of each of the two DL CCs; ACK/NACK feedback information of codeword 0 acquired by the UE on the DL PCC refers to NACK, then such information is replicated as the feedback information of the non-schedules codeword 1, that is to say, the feedback information corresponding to codeword 1 also refers to NACK; if the UE cannot detect data packets on the DL SCC, ACK/NACK feedback information generated for the DL SCC refers to 2 DTXs and 4-bit ACK/NACK feedback information generated by the UE finally refers to [NACK,NACK,DTX,DTX]; the UE determines the implicit channel resource on a UL PCC through a minimum CCE number of the PDCCH on the DL PCC which is used to schedule the codeword 0, such implicit channel resource is taken as the implicit channel resource corresponding to the DL PCC in an ACK/NACK mapping table, namely the first channel resource, $n_{PUCCH,0}^{(1)}$ as shown in Table 3; then the UE determines that the channel resource of ACK/NACK feedback information to be fed back refers to the first channel resource (namely the first implicit channel resource corresponding to the DL PCC), and the corresponding modulation symbol of ACK/NACK feedback information to be fed back refers to "1" in accordance with an ACK/NACK mapping table; finally, the UE sends the modulation symbol, "1" on the implicit channel resource determined in accordance with the minimum CCE number of the PDCCH scheduling the codewrod 0;

Base station side: the base station only schedules the codeword 0 on the DL PCC, so the base station receives ACK/NACK feedback information with PUCCH format 1a. Since channel resource of PUCCH format 1a refers to the implicit channel resource on the UL PCC corresponding to a minimum CCE number of the PDCCH scheduling the codeword 0 and modulation symbol corresponding to ACK in PUCCH format 1a also refers to "1". That is to say, the UE shares the same transmission channel and transmission modulation symbol with the base station actually, and inconsistency does not exist. Then the base station detects channel resource of PUCCH format 1a (namely, the implicit channel resource on the UL PCC corresponding to a minimum CCE number of the PDCCH scheduling the codeword 0) and modulation symbol "1" sent by UE can be acquired, namely, the feedback information NACK of codeword 0 sent by UE can be obtained.

Application scene V: During a DL CC reconfiguration, two DL CCs to one DL CC is reconfigured for a UE. As shown in the scene of Figure 7, DL CC1 refers to a DL PCC, which is transmitted in a single-codeword mode. DL CC2 refers to a DL SCC, which is transmitted in a multi-codeword mode. An eNB only schedules codeword 0 on a DL SCC through a PDCCH with cross-carrier scheduling using DCI format 2, DCI format 2A, DCI format 2B or DCI format 2C or DCI format 1A on a DL PCC. Transmission procedure of ACK/NACK is as follows:

UE side: Within the period that reconfiguration is not effective, a UE still runs based on the configuration of two DL CCs and transmitts ACK/NACK with a PUCCH format 1b with channel selection scheme, that is to say, the UE determines that it is necessary to feed back 3-bit ACK/NACK in accordance with the configuration of two DL CCs and the transmission mode of each of the two DL CCs; ACK/NACK feedback information of codeword 0 acquired by the UE on the DL SCC refers to ACK, then such information is replicated as the feedback information of the non-scheduled codeword 1, that is to say, the feedback information corresponding to codeword 1 also refers to ACK; if the UE cannot detect data packets on the DL PCC, ACK/NACK feedback information generated for the DL PCC refers to 1 DTX and 3-bit ACK/NACK feedback information generated by the UE finally refers to [ACK, ACK, DTX] (for 3-bit transmission, ACK/NACK feedback information of a DL CC configured as a multi-codeword transmission mode is placed at the beginning of feedback information sequence, that is to say, such information corresponds to the first two ACK/NACK feedback statues in an ACK/NACK mapping table); the UE determines the implicit channel resource on a UL PCC through a minimum CCE number of the PDCCH on the DL PCC that is used to schedule the codeword 0 on DL SCC, such implicit channel resource is taken as the implicit channel resource corresponding to the DL SCC in an ACK/NACK mapping table, namely the first channel resource, $n_{PUCCH,0}^{(1)}$ as shown in Table 3; then the UE determines that the channel resource of ACK/NACK feedback information to be fed back refers to the first channel resource (namely the implicit channel resource corresponding to the DL SCC), and the corresponding modulation symbol of ACK/NACK feedback information to be fed back refers to "-1" in accordance with an ACK/NACK mapping table; finally, the UE sends the modulation symbol, "-1" on the implicit channel resource determined in accordance with the minimum CCE number of the PDCCH sheduling the codewrod 0;

Base station side: The base station only schedule the codeword 0 at DL SCC, so the base station receives ACK/NACK feedback information by using PUCCH format 1a. Since channel resource of PUCCH format 1a refers to the implicit channel resource on the UL PCC corresponding to a minimum CCE number of the PDCCH scheduling the codeword 0 on SCC and modulation symbol corresponding to ACK in PUCCH format 1a also refers to "-1", that is to say, the UE shares the same transmission channel and transmission modulation symbol with the base station actually, and inconsistency problem does not exist. The base station detects channel resource of PUCCH format 1a (namely, the implicit channel resource on the UL PCC corresponding to a minimum CCE number of the PDCCH scheduling the codeword 0) and modulation symbol "-1" sent by UE can be acquired, namely, feedback information ACK of codeword 0 on the DL SCC sent by UE can be obtained.

Application scene VI: During a DL CC reconfiguration, two DL CCs to one DL CC is reconfigured for a UE. As shown in the scene of Figure 8, DL CC1 refers to a DL PCC, which is transmitted in a multi-codeword mode. DL CC2 refers to a DL SCC, which is transmitted in a single-codeword mode. An eNB only transmitts one PDCCH indicating downlink SPS resource release (SPS release PDCCH) on the DL PCC. Transmission procedure of ACK/NACK is as follows:

UE side: Within the period that reconfiguration is not effective, a UE still runs based on the configuration of two DL CCs and transmitts ACK/NACK with a PUCCH format 1b with channel selection scheme, that is to say, the UE determines that it is necessary to feed back 3-bit ACK/NACK in accordance with the configuration of two DL CCs and the transmission mode of each of the two DL CCs; ACK/NACK feedback information of a PDCCH indicating downlink SPS resource release refers to NACK, then such information is replicated to 2 bits as ACK/NACK feedback information of the DL PCC, that is to say, such PDCCH is always processed as codeword 0 in multi-codeword transmission modes, feedback information corresponding to the position of non-schedules codeword 1 is obtained through replication, that is to say, feedback information corresponding to the position of codeword 1 also refers to NACK; if the UE cannot detect data packets on the DL SCC, ACK/NACK feedback information generated for the DL SCC refers to DTX and 3-bit ACK/NACK feedback information generated by the UE finally refers to [NACK,NACK,DTX]; the UE determines the implicit channel resource on a UL PCC through a minimum CCE number of the PDCCH indicating downlink SPS resource release received on the DL PCC, such implicit channel resource is taken as the implicit channel resource corresponding to the DL PCC in an ACK/NACK mapping table, namely the first channel resource, $n_{PUCCH,0}^{(1)}$ as shown in Table 2; then the UE determines that the channel resource of ACK/NACK feedback information to be fed back refers to the first channel resource (namely the first implicit channel resource corresponding to the DL PCC), and the corresponding modulation symbol of ACK/NACK feedback information to be fed back refers to "1" in accordance with an ACK/NACK mapping table; finally, the UE sends the modulation symbol, "1" on the implicit channel resource determined in accordance with the minimum CCE number of the PDCCH indicating downlink SPS resource release;

Base station side: A base station only sends one PDCCH indicating downlink SPS resource release, so the base station receives ACK/NACK feedback information with PUCCH format 1a; since the channel resource of a PUCCH format 1a refers to the implicit channel resource on the UL PCC corresponding to a minimum CCE number of the PDCCH indicating downlink SPS resource release and the modulation symbol corresponding to NACK in PUCCH format 1a also refers to "1", that is to say, the UE shares the same transmission channel and transmission modulation symbol with the base station actually, inconsistency does not exist; the base station detects channel resource of PUCCH format 1a (namely, the implicit channel resource on the UL PCC corresponding to a minimum CCE number of the PDCCH indicating downlink SPS resource release) and modulation symbol "1" sent by the UE can be acquired, namely, feedback information NACK of the PDCCH indicating downlink SPS resource release sent by the UE can be obtained.

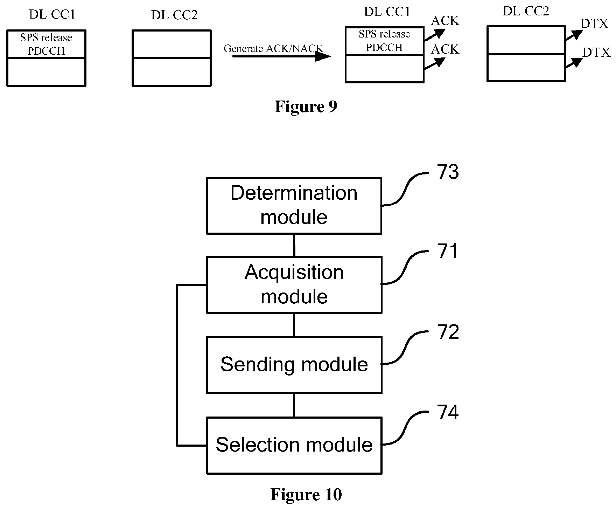

Application scene VII: During a DL CC reconfiguration, two DL CCs to one DL CC is reconfigured for a UE. As shown in the scene of Figure 9, DL CC1 refers to a DL PCC, which is transmitted in a multi-codeword mode. DL CC2 refers to a DL SCC, which is transmitted in a multi-codeword mode too. An eNB only transmitts one PDCCH indicating downlink SPS resource release on the DL PCC. Transmission procedure of ACK/NACK is as follows:

UE side: Within the period that reconfiguration is not effective, a UE still runs based on the configuration of two DL CCs and transmitts ACK/NACK with a PUCCH format 1b with channel selection scheme, that is to say, the UE determines that it is necessary to feed back 4-bit ACK/NACK in accordance with the configuration of two DL CCs and the transmission mode of each of the two DL CCs; ACK/NACK feedback information of the PDCCH indicating downlink SPS resource release refers to ACK, then such information is replicated to 2 bits as ACK/NACK feedback information of the DL PCC, that is to say, such PDCCH is always processed as codeword 0 in the multi-codeword transmission mode, feedback information corresponding to the position of non-schedules codeword 1 is obtained through replication, that is to say, feedback information corresponding to the position of codeword 1 also refers to ACK; if the UE cannot detect data packets on the DL SCC, ACK/NACK feedback information generated for the DL SCC refers to DTX and 4-bit ACK/NACK feedback information generated by the UE finally refers to [ACK, ACK, DTX, DTX]; the UE determines the implicit channel resource on the UL PCC through a minimum CCE number of the PDCCH indicating downlink SPS resource release received on the DL PCC, such implicit channel resource is taken as the implicit channel resource corresponding to the DL PCC in an ACK/NACK mapping table, namely the first channel resource, $n_{PUCCH,0}^{(1)}$ as shown in Table 3; then the UE determines that the channel resource of ACK/NACK feedback information to be fed back refers to the first channel resource (namely the first implicit channel resource corresponding to the DL PCC), and the corresponding modulation symbol of ACK/NACK feedback information to be fed back refers to "-1" in accordance with an ACK/NACK mapping table; finally, the UE sends the modulation symbol, "-1" on the implicit channel resource determined in accordance with the minimum CCE number of PDCCH indicating downlink SPS resource release;

Base station side: A base station only sends one PDCCH indicating downlink SPS resource release on the DL PCC, so the base station receives ACK/NACK feedback information with PUCCH format 1a; since the channel resource of a PUCCH format 1a refers to the implicit channel resource on the UL PCC corresponding to a minimum CCE number of the PDCCH indicating downlink SPS resource release and the modulation symbol corresponding to ACK in PUCCH format 1a also refers to "-1", that is to say, the UE shares the same transmission channel and transmission modulation symbol with the base station actually, inconsistency does not exist; the base station detects channel resource of PUCCH format 1a (namely, the implicit channel resource on the UL PCC corresponding to a minimum CCE number of the PDCCH indicating downlink SPS resource release) and modulation symbol "-1" sent by the UE can be acquired, namely, feedback information ACK of the PDCCH indicating downlink SPS resource release sent by the UE can be obtained.

Compared with related art, the embodiments of the present invention have the following advantages:
By applying the technical solutions of the present invention, when ACK/NACK feedback information is transmitted based on an ACK/NACK mapping table with a PUCCH format 1b with channel selection scheme, the problem of inconsistent detection results due to inconformity of the transmission scheme between a base station and a user equipment (UE) in the procedure of feeding back the ACK/NACK feedback information can be avoided, so as to implement a fallback of LTE Rel-8 PUCCH format 1a/1b.

To implement the technical solution of the present invention, the embodiments of the present invention also provide a UE, whose structure diagram is shown in Figure 10, which comprises:

an acquisition module 71, which is configured to acquire, in the condition that the UE receives one codeword on a downlink primary component carrier configured as a multi-codeword transmission mode, the one codeword on the downlink primary component carrier being one and only code received by the UE, 1-bit ACK/NACK feedback information in accordance with one received codeword on the downlink primary component carrier, replicate such 1-bit ACK/NACK feedback information to 2 bits, as ACK/NACK feedback bits corresponding to the downlink primary component carrier, and acquire ACK/NACK feedback bit(s) corresponding to each of configured downlink secondary component carrier(s);

Herein, one codeword includes one-codeword transmission of dynamic scheduling and PDCCH transmission indicating downlink semi-persistent scheduling (SPS) resource release, that is to say, when the UE receives only one PDCCH indicating downlink SPS resource release on the downlink primary component carrier configured as a multi-codeword transmission mode, one codeword mentioned above is equivalent to such PDCCH. The UE receives 1-bit ACK/NACK feedback information of the PDCCH indicating downlink SPS resource release, and replicates the 1-bit ACK/NACK feedback information to 2 bits as ACK/NACK feedback bits corresponding to the downlink primary component carrier.

a sending module 72, which is configured to send the acquired ACK/NACK feedback bits corresponding to both the downlink primary component carrier and the configured downlink secondary component carrier(s) acquired by the acquisition module 71.

In a specific application scenes, the UE also includes determination module 73, which is configured to determine a quantity of ACK/NACK feedback bits to be fed back by the UE, wherein a sum of the quantity of ACK/NACK feedback bits corresponding to each of the configured downlink secondary component carrier(s) and 2-bit ACK/NACK feedback bits corresponding to the downlink primary component carrier is equal to the quantity of ACK/NACK feedback bits to be fed back by the UE. The determining, by the UE, the quantity of ACK/NACK feedback bits to be fed back by the UE comprises:

in the case of an FDD system, the determination module determines the quantity of ACK/NACK feedback bits to be fed back by the UE in accordance with a quantity of configured downlink component carriers and transmission mode of each of the configured downlink component carriers; and

in the case of a TDD system, the determination module determines the quantity of ACK/NACK feedback bits to be fed back by the UE in accordance with the quantity of configured downlink component carriers, a quantity of downlink subframes of ACK/NACK feedback bits to be fed back by the UE corresponding to an uplink subframe, and transmission mode of each of the configured downlink component carriers.

Furthermore, acquisition module 71 is also configured to acquire candidate channel resources, wherein the candidate channel resources at least comprise one dynamic channel resource corresponding to a PDCCH which schedules the downlink primary component carrier.

The acquisition module 71 is also configured to determine the one dynamic channel resource in accordance with a minimum Control Channel Element (CCE) number of the PDCCH which schedules the one single downlink primary component carrier. Herein, the PDCCH which schedules the downlink primary component carrier comprises the PDCCH transmitted by dynamic scheduling data and the PDCCH indicating downlink SPS resource release.

Besides, the UE also includes a selection module 74, which is configured to take the one dynamic channel resource acquired by the acquisition module in accordance with a minimum CCE number of the PDCCH which schedules the downlink primary component carrier as the first dynamic channel resource corresponding to the downlink primary component carrier among the candidate channel resources used for channel selection by UE, that is to say, such dynamic channel resource is taken as the first channel resource among candidate channel resources used for channel selection. It should be pointed out that selection module 74 is also configured to determines a corresponding channel resource and modulation symbol among candidate channel resources in accordance with ACK/NACK feedback bits corresponding to each of the configured downlink component carriers acquired by the acquisition module 71 when the UE transmitts ACK/NACK feedback information with a PUCCH format 1b with channel selection;

The sending module 72 is specifically configured to send modulation symbol on corresponding channel resources selected by selection module 74.

It should be further noted that acquisition module 71 acquires the ACK/NACK feedback bits corresponding to each of the configured downlink secondary component carrier(s), which comprises:

The acquisition module 71 generates NACK or DTX feedback bits for each of the configured downlink secondary component carrier(s) without receiving any codeworddownlink secondary component carrier(s); or,

when the UE receives only one codeword on a downlink secondary component carrier(s) configured as the multi-codeword transmission mode, the acquisition module 71 acquires 1-bit ACK/NACK feedback information in accordance with the one received codeword and replicates the 1-bit ACK/NACK feedback information to 2 bits as ACK/NACK feedback bits of the downlink secondary component carrier(s)downlink secondary component carrier(s)downlink secondary component carrier(s).

Compared with related art, the embodiments of the present invention have the following advantages:
By applying the technical solution of the present invention, when ACK/NACK feedback information is transmitted based on an ACK/NACK mapping table with a PUCCH format 1b with channel selection scheme, the problem of inconsistent detection results due to inconformity of the transmission scheme between a base station and a user equipment (UE) in the procedure of feeding back the ACK/NACK feedback information can be avoided, so as to implement a fallback of LTE Rel-8 PUCCH format 1a/1b.

With the description of the preferred embodiments hereinabove, those skilled in the art can clearly understand that the present invention can be realized with the aid of software and necessary commonly used hardware platforms, or the aid of hardware of course, but the former is a preferred embodiment in most cases. Based on this understanding, the technical proposal of the present invention or the part contributing to the related art can be reflected in the form of a software product, which is saved in a memory medium comprising instructions to enable a user equipment, which could be a personal computer, a server or a network device, to carry out the methods for each embodiment of the present invention.

Technical personnel of the field can understand that the drawings only refer to the diagram of a preferred embodiment, and the module or procedure is unnecessary for the implementation of the embodiments of the present invention.

Technical personnel of the field can understand that the module in the unit of an embodiment can be distributed in such unit based on embodiment description, or located in one or more units of another embodiment through corresponding changes. Modules of the embodiments mentioned above can be merged into one module, or further divided into a plurality of submodules.

The number of the aforementioned embodiments of the present invention is only used for description rather than for representing advantages or disadvantages.

Only several specific embodiments of the present invention are released above. However, the present invention is defined by the appended claims.

**Claims**

1. A method for transmitting multi-bit ACK/NACK feedback information using Physical Uplink Control Channel, PUCCH, Format 1b with channel selection, the method comprising:

   acquiring (S302), by a User Equipment, UE, for a serving cell from a primary cell and a secondary cell configured for the UE, 1-bit ACK/NACK feedback information in accordance with one received codeword on the serving cell, when the UE receives one codeword on the serving cell configured as a multi-codeword transmission mode, the one codeword being one and only codeword received by the UE on the serving cell, and replicating such 1-bit ACK/NACK feedback information to 2 bits as ACK/NACK feedback bits corresponding to the serving cell; and
   sending (S304), by the UE, the ACK/NACK feedback bits.

2. The method according to claim 1, wherein the method further comprises:
   determining (S301), by the UE, a quantity of ACK/NACK feedback bits to be fed back by the UE as a sum of a quantity of ACK/NACK feedback bits corresponding to the primary cell and a quantity of ACK/NACK feedback bits corresponding to the secondary cell.

3. The method according to claim 2, wherein the determining (S301), by the UE, the quantity of ACK/NACK feedback bits to be fed back by the UE comprises:

   determining, by the UE, in the case of an FDD system, the quantity of ACK/NACK feedback bits to be fed back by the UE in accordance with a quantity of serving cells and transmission mode of each serving cell; or,
   determining, by the UE, in the case of a TDD system, the quantity of ACK/NACK feedback bits to be fed back by the UE in accordance with a quantity of serving cells, a quantity of downlink subframes of ACK/NACK feedback bits to be fed back by the UE corresponding to an uplink subframe, and transmission mode of each serving cell.

4. The method according to claim 1, wherein the sending (S304), by the UE, the ACK/NACK feedback bits comprises:

   determining, by the UE, one channel resource among candidate channel resources and a corresponding modulation symbol in accordance with the ACK/NACK feedback bits corresponding to the primary cell and the secondary cell configured for the UE by using a PUCCH format 1b with channel selection scheme; and
   sending, by the UE, the corresponding modulation symbol on the determined one channel resource.

5. The method according to claim 4, wherein the candidate channel resources at least comprise one dynamic channel resource corresponding to a Physical Downlink Control Channel, PDCCH, which schedules the one primary cell and the one secondary cell configured for the UE.

6. The method according to claim 5, wherein the one dynamic channel resource corresponds to a minimum Control Channel Element, CCE, number of the PDCCH.

**7.** The method according to claim 6, wherein the UE takes the one dynamic channel resource corresponding to a minimum CCE number of the PDCCH as a first dynamic channel resource corresponding to the one primary cell and the one secondary cell configured for the UE among the candidate channel resources used for channel selection.

**8.** A User Equipment, UE, using Physical Uplink Control Channel, PUCCH, Format 1b with channel selection, the UE comprising:

an acquisition module (71), which is adapted to acquire, when the UE receives one codeword on a serving cell configured as a multi-codeword transmission mode, the one codeword being one and only codeword received by the UE on the serving cell, for a serving cell from a primary cell and a secondary cell configured for the UE, 1-bit ACK/NACK feedback information in accordance with one received codeword on the serving cell, replicate such 1-bit ACK/NACK feedback information to 2 bits as ACK/NACK feedback bits corresponding to the serving cell; and
a sending module (72), which is adapted to send the ACK/NACK feedback bits.

**9.** The UE according to claim 8, wherein the UE is further configured to:
determine a quantity of ACK/NACK feedback bits to be fed back by the UE as a sum of a quantity of ACK/NACK feedback bits corresponding to the primary cell and a quantity of ACK/NACK feedback bits corresponding to the secondary cell.

**10.** The UE according to claim 9, wherein the UE is further configured to:

determine, in the case of an FDD system, the quantity of ACK/NACK feedback bits to be fed back by the UE in accordance with a quantity of serving cells and transmission mode of each serving cell; or,
determine, in the case of a TDD system, the quantity of ACK/NACK feedback bits to be fed back by the UE in accordance with a quantity of serving cells, a quantity of downlink subframes of ACK/NACK feedback bits to be fed back by the UE corresponding to an uplink subframe, and transmission mode of each serving cell.

**11.** The UE according to claim 8, wherein the UE is further configured to:

determine one channel resource among candidate channel resources and a corresponding modulation symbol in accordance with the ACK/NACK feedback bits corresponding to the primary cell and the secondary cell configured for the UE by using a PUCCH format 1b with channel selection scheme; and
send the corresponding modulation symbol on the determined one channel resource.

**12.** The UE according to claim 11, wherein the candidate channel resources at least comprise one dynamic channel resource corresponding to a Physical Downlink Control Channel, PDCCH, which schedules the one primary cell and the one secondary cell configured for the UE.

**13.** The UE according to claim 12, wherein the one dynamic channel resource corresponds to a minimum Control Channel Element, CCE, number of the PDCCH.

**14.** The UE according to claim 13, wherein the UE takes the one dynamic channel resource corresponding to a minimum CCE number of the PDCCH as a first dynamic channel resource corresponding to the one primary cell and the one secondary cell configured for the UE among the candidate channel resources used for channel selection.

**15.** A computer-readable storage medium comprising instructions which, when executed by a computer, cause the computer to carry out the method according to any one of claims 1-7.

**Patentansprüche**

**1.** Verfahren zum Übertragen von Mehrbit-ACK/NACK-Rückmeldeinformationen unter Verwendung von physikalischem Uplink-Steuerkanal, PUCCH, Format 1b mit Kanalauswahl, das Verfahren umfassend:

Erfassen (S302) von 1-Bit-ACK/NACK-Rückmeldeinformationen durch eine Benutzerausrüstung, UE, für eine bedienende Zelle von einer primären Zelle und einer sekundären Zelle, die für die UE konfiguriert sind, in Übereinstimmung mit einem empfangenen Codewort auf der bedienenden Zelle, wenn die UE ein Codewort auf der bedienenden Zelle empfängt, die als ein Multicodewortübertragungsmodus konfiguriert ist, wobei das eine Codewort ein einziges Codewort ist, das von der UE auf der bedienenden Zelle empfangen wird, und Replizieren solcher 1-Bit-ACK/NACK-Rückmeldeinformationen auf 2 Bits als ACK/NACK-Rückmeldebits, die der bedienenden Zelle entsprechen; und

Senden (S304) der ACK/NACK-Rückmeldebits durch die UE.

2. Verfahren nach Anspruch 1, wobei das Verfahren ferner Folgendes umfasst:
Bestimmen (S301), durch die UE, einer Menge von ACK/NACK-Rückmeldebits, die durch die UE als eine Summe einer Menge von ACK/NACK-Rückmeldebits, die der primären Zelle entsprechen, und einer Menge von ACK/NACK-Rückmeldebits, die der sekundären Zelle entsprechen, zurückgeführt werden sollen.

3. Verfahren nach Anspruch 2, wobei das Bestimmen (S301) der Menge an ACK/NACK-Rückmeldebits, die von der UE zurückgesendet werden sollen, durch die UE Folgendes umfasst:

Bestimmen der Anzahl von ACK/NACK-Rückmeldebits durch die UE im Falle eines FDD-Systems, die von der UE in Übereinstimmung mit einer Anzahl von bedienenden Zellen und dem Übertragungsmodus jeder bedienenden Zelle zurückgesendet werden sollen; oder

Bestimmen, durch die UE, im Fall eines TDD-Systems, der Menge von ACK/NACK-Rückmeldebits, die durch die UE zurückgeführt werden sollen, in Übereinstimmung mit einer Menge von bedienenden Zellen, einer Menge von Downlink-Teilrahmen von ACK/NACK-Rückmeldebits, die durch die UE zurückgeführt werden sollen, entsprechend einem Uplink-Teilrahmen, und dem Übertragungsmodus jeder bedienenden Zelle.

4. Verfahren nach Anspruch 1, wobei das Senden (S304) der ACK/NACK-Rückmeldebits durch die UE Folgendes umfasst:

Bestimmen, durch die UE, einer Kanalressource unter den Kandidatenkanalressourcen und eines entsprechenden Modulationssymbols in Übereinstimmung mit den ACK/NACK-Rückmeldebits entsprechend der primären Zelle und der sekundären Zelle, die für die UE konfiguriert sind, unter Verwendung eines PUCCH-Formats 1b mit Kanalauswahlschema; und

Senden des entsprechenden Modulationssymbols auf der bestimmten Kanalressource durch die UE.

5. Verfahren nach Anspruch 4, wobei die Kandidatenkanalressourcen mindestens eine dynamische Kanalressource umfassen, die einem physikalischen Downlink-Steuerkanal, PDCCH, entspricht, der die eine primäre Zelle und die eine sekundäre Zelle einplant, die für die UE konfiguriert sind.

6. Verfahren nach Anspruch 5, wobei die eine dynamische Kanalressource einer Mindestanzahl von Steuerkanalelementen, CCE, des PDCCH entspricht.

7. Verfahren nach Anspruch 6, wobei die UE die eine dynamische Kanalressource, die einer minimalen CCE-Zahl des PDCCH entspricht, als eine erste dynamische Kanalressource, die der einen primären Zelle und der einen sekundären Zelle entspricht, die für die UE konfiguriert sind, unter den für die Kanalauswahl verwendeten Kandidatenkanalressourcen nimmt.

8. Benutzerausrüstung, UE, die den physikalischen Uplink-Steuerkanal, PUCCH, im Format 1b mit Kanalauswahl verwendet, die UE umfassend:

ein Erfassungsmodul (71), das angepasst ist, um, wenn die UE ein Codewort auf einer bedienenden Zelle empfängt, die als ein Multicodewortübertragungsmodus konfiguriert ist, wobei das eine Codewort ein einziges Codewort ist, das von der UE auf der bedienenden Zelle empfangen wird, für eine bedienende Zelle von einer primären Zelle und einer sekundären Zelle, die für die UE konfiguriert sind, 1-Bit-ACK/NACK-Rückmeldeinformationen in Übereinstimmung mit einem empfangenen Codewort auf der bedienenden Zelle zu erfassen, solche 1-Bit-ACK/NACK-Rückmeldeinformationen auf 2 Bits als ACK/NACK-Rückmeldebits entsprechend der bedienenden Zelle zu replizieren; und

ein Sendemodul (72), das zum Senden der ACK/NACK-Rückmeldebits eingerichtet ist.

9. UE nach Anspruch 8, wobei die UE ferner konfiguriert ist zum:
Bestimmen einer Menge von ACK/NACK-Rückmeldebits, die von der UE als Summe einer Menge von ACK/NACK-Rückmeldebits entsprechend der Primärzelle und einer Menge von ACK/NACK-Rückmeldebits entsprechend der Sekundärzelle zurückgeführt werden sollen.

**10.** UE nach Anspruch 9, wobei die UE ferner konfiguriert ist zum:

Bestimmen der Anzahl von ACK/NACK-Rückmeldebits im Falle eines FDD-Systems, die von der UE in Übereinstimmung mit einer Anzahl von bedienenden Zellen und dem Übertragungsmodus jeder bedienenden Zelle zurückgesendet werden sollen; oder
Bestimmen, im Fall eines TDD-Systems, der Menge von ACK/NACK-Rückmeldebits, die durch die UE zurückgeführt werden sollen, in Übereinstimmung mit einer Menge von bedienenden Zellen, einer Menge von Downlink-Teilrahmen von ACK/NACK-Rückmeldebits, die durch die UE zurückgeführt werden sollen, entsprechend einem Uplink-Teilrahmen, und dem Übertragungsmodus jeder bedienenden Zelle.

**11.** UE nach Anspruch 8, wobei die UE ferner konfiguriert ist zum:

Bestimmen einer Kanalressource unter den Kandidatenkanalressourcen und eines entsprechenden Modulationssymbols in Übereinstimmung mit den ACK/NACK-Rückmeldebits entsprechend der primären Zelle und der sekundären Zelle, die für die UE konfiguriert sind, unter Verwendung eines PUCCH-Formats 1b mit Kanalauswahlschema; und
Senden des entsprechenden Modulationssymbols auf der bestimmten Kanalressource.

**12.** UE nach Anspruch 11, wobei die Kandidatenkanalressourcen mindestens eine dynamische Kanalressource umfassen, die einem physikalischen Downlink-Steuerkanal, PDCCH, entspricht, der die eine primäre Zelle und die eine sekundäre Zelle einplant, die für die UE konfiguriert sind.

**13.** UE nach Anspruch 12, wobei die eine dynamische Kanalressource einer Mindestanzahl von Steuerkanalelementen, CCE, des PDCCH entspricht.

**14.** UE nach Anspruch 13, wobei die UE die eine dynamische Kanalressource, die einer minimalen CCE-Zahl des PDCCH entspricht, als eine erste dynamische Kanalressource, die der einen primären Zelle und der einen sekundären Zelle entspricht, die für die UE konfiguriert sind, unter den für die Kanalauswahl verwendeten Kandidatenkanalressourcen nimmt.

**15.** Computerlesbares Speichermedium, umfassend Anweisungen, die, wenn sie von einem Computer ausgeführt werden, den Computer veranlassen, das Verfahren nach einem der Ansprüche 1 bis 7 auszuführen.

**Revendications**

**1.** Procédé pour la transmission d'informations de retour ACK/NACK multi bits à l'aide du format 1b de canal de commande de liaison montante physique, PUCCH, avec sélection de canal, le procédé comprenant :

l'acquisition (S302), par un équipement utilisateur, UE, pour une cellule de desserte à partir d'une cellule primaire et d'une cellule secondaire configurées pour l'UE, d'informations de retour ACK/NACK à 1 bit conformément à un cryptonyme reçu sur la cellule de desserte, lorsque l'UE reçoit un cryptonyme sur la cellule de desserte configurée comme mode de transmission à cryptonymes multiples, l'un cryptonyme étant le seul et unique cryptonyme reçu par l'UE sur la cellule de desserte, et la réplication de telles informations de retour ACK/NACK à 1 bit sur 2 bits en tant que bits de retour ACK/NACK correspondant à la cellule de desserte ; et
l'envoi (S304), par l'UE, des bits de retour ACK/NACK.

**2.** Procédé selon la revendication 1, dans lequel le procédé comprend en outre :
la détermination (S301), par l'UE, d'une quantité de bits de retour ACK/NACK à transmettre en retour par l'UE en tant que somme d'une quantité de bits de retour ACK/NACK correspondant à la cellule primaire et d'une quantité de bits de retour ACK/NACK correspondant à la cellule secondaire.

**3.** Procédé selon la revendication 2, dans lequel la détermination (S301), par l'UE, de la quantité de bits de retour ACK/NACK à transmettre en retour par l'UE comprend :

la détermination, par l'UE, dans le cas d'un système FDD, de la quantité de bits de retour ACK/NACK à transmettre en retour par l'UE conformément à une quantité de cellules de desserte et à un mode de transmission de chaque cellule de desserte ; ou,

la détermination, par l'UE, dans le cas d'un système TDD, de la quantité de bits de retour ACK/NACK à transmettre en retour par l'UE conformément à une quantité de cellules de desserte, d'une quantité de sous-trames de liaison descendante de bits de retour ACK/NACK à transmettre en retour par l'UE correspondant à une sous-trame de liaison montante et à un mode de transmission de chaque cellule de desserte.

4. Procédé selon la revendication 1, dans lequel l'envoi (S304), par l'UE, des bits de retour ACK/NACK comprend :

la détermination, par l'UE, d'une ressource de canal parmi des ressources de canal candidates et d'un symbole de modulation correspondant conformément aux bits de retour ACK/NACK correspondant à la cellule primaire et à la cellule secondaire configurées pour l'UE en utilisant un format 1b de PUCCH avec un schéma de sélection de canal ; et
l'envoi, par l'UE, du symbole de modulation correspondant sur l'une ressource de canal déterminée.

5. Procédé selon la revendication 4, dans lequel les ressources de canal candidates comprennent au moins une ressource de canal dynamique correspondant à un canal de commande de liaison descendante physique, PDCCH, qui planifie l'une cellule primaire et l'une cellule secondaire configurées pour l'UE.

6. Procédé selon la revendication 5, dans lequel l'une ressource de canal dynamique correspond à un numéro d'élément de canal de commande, CCE, minimal du PDCCH.

7. Procédé selon la revendication 6, dans lequel l'UE prend l'une ressource de canal dynamique correspondant à un numéro CCE minimal du PDCCH en tant que première ressource de canal dynamique correspondant à l'une cellule primaire et à l'une cellule secondaire configurées pour l'UE parmi les ressources de canal candidates utilisées pour la sélection de canal.

8. Équipement utilisateur, UE, utilisant le format 1b de canal de commande de liaison montante physique, PUCCH, avec sélection de canal, l'UE comprenant :

un module d'acquisition (71) qui est réalisé pour acquérir, lorsque l'UE reçoit un cryptonyme sur une cellule de desserte configurée comme mode de transmission à cryptonymes multiples, l'un cryptonyme étant le seul et unique cryptonyme reçu par l'UE sur la cellule de desserte, pour une cellule de desserte à partir d'une cellule primaire et d'une cellule secondaire configurées pour l'UE, des informations de retour ACK/NACK à 1 bit conformément à un cryptonyme reçu sur la cellule de desserte, pour répliquer de telles informations de retour ACK/NACK à 1 bit en 2 bits en tant que bits de retour ACK/NACK correspondant à la cellule de desserte ; et
un module d'envoi (72) qui est réalisé pour envoyer les bits de retour ACK/NACK.

9. UE selon la revendication 8, dans lequel l'UE est en outre configuré pour :
déterminer une quantité de bits de retour ACK/NACK à transmettre en retour par l'UE en tant que somme d'une quantité de bits de retour ACK/NACK correspondant à la cellule primaire et d'une quantité de bits de retour ACK/NACK correspondant à la cellule secondaire.

10. UE selon la revendication 9, dans lequel l'UE est en outre configuré pour :

déterminer, dans le cas d'un système FDD, la quantité de bits de retour ACK/NACK à transmettre en retour par l'UE conformément à une quantité de cellules de desserte et à un mode de transmission de chaque cellule de desserte ; ou,
déterminer, dans le cas d'un système TDD, la quantité de bits de retour ACK/NACK à transmettre en retour par l'UE conformément à une quantité de cellules de desserte, une quantité de sous-trames de liaison descendante de bits de retour ACK/NACK à transmettre en retour par l'UE correspondant à une sous-trame de liaison montante et à un mode de transmission de chaque cellule de desserte.

11. UE selon la revendication 8, dans lequel l'UE est en outre configuré pour :

déterminer une ressource de canal parmi des ressources de canal candidates et un symbole de modulation correspondant conformément aux bits de retour ACK/NACK correspondant à la cellule primaire et à la cellule secondaire configurées pour l'UE en utilisant un format 1b de PUCCH avec un schéma de sélection de canal ; et
envoyer le symbole de modulation correspondant sur l'une ressource de canal déterminée.

**12.** UE selon la revendication 11, dans lequel les ressources de canal candidates comprennent au moins une ressource de canal dynamique correspondant à un canal de commande de liaison descendante physique, PDCCH, qui planifie l'une cellule primaire et l'une cellule secondaire configurées pour l'UE.

**13.** UE selon la revendication 12, dans lequel l'une ressource de canal dynamique correspond à un numéro d'élément de canal de commande, CCE, minimal du PDCCH.

**14.** UE selon la revendication 13, dans lequel l'UE prend l'une ressource de canal dynamique correspondant à un numéro CCE minimal du PDCCH en tant que première ressource de canal dynamique correspondant à l'une cellule primaire et à l'une cellule secondaire configurées pour l'UE parmi les ressources de canal candidates utilisées pour la sélection de canal.

**15.** Support de stockage lisible par ordinateur comprenant des instructions qui, lorsqu'exécutées par un ordinateur, amènent l'ordinateur à effectuer le procédé selon l'une quelconque des revendications 1 à 7.

**Figure 1**

**Figure 2**

The UE determines the number of ACK/NACK feedback bits to be fed back — S301

When the UE receives only one codeword on a downlink primary component carrier configured as a multi-codeword transmission mode, the UE acquires 1-bit ACK/NACK feedback information in accordance with one received codeword and replicates the 1-bit ACK/NACK feedback information to 2 bits — S302

The UE acquires ACK/NACK feedback bit(s) corresponding to each of configured downlink secondary component carriers — S303

The UE sends the acquired ACK/NACK feedback bits corresponding to both the downlink primary component carrier and the configured downlink secondary component carriers — S304

**Figure 3**

DL CC1 | DL CC2 | Generate ACK/NACK | DL CC1 | DL CC2

Codeword1 | | | Codeword1 ACK ACK | DTX

**Figure 4**

DL CC1 | DL CC2 | Generate ACK/NACK | DL CC1 | DL CC2

Codeword0 | | | Codeword0 ACK ACK | DTX

**Figure 5**

DL CC1      DL CC2      Generate ACK/NACK      DL CC1   ACK    DL CC2   DTX

Codeword0            Codeword0   ACK        DTX

**Figure 6A**

DL CC1      DL CC2      Generate ACK/NACK      DL CC1   NACK    DL CC2   DTX

Codeword0            Codeword0   NACK       DTX

**Figure 6B**

DL CC1      DL CC2      Generate ACK/NACK      DL CC1   DTX    DL CC2   ACK

         Codeword0                     Codeword0   ACK

**Figure 7**

DL CC1      DL CC2      Generate ACK/NACK      DL CC1   NACK    DL CC2   DTX

SPS release PDCCH          SPS release PDCCH   NACK

**Figure 8**

DL CC1

| SPS release PDCCH |
| --- |
| |

DL CC2

| |
| --- |
| |

Generate ACK/NACK →

DL CC1

| SPS release PDCCH |
| --- |
| |

ACK
ACK

DL CC2

| |
| --- |
| |

DTX
DTX

**Figure 9**

```
┌─────────────────┐
│  Determination  │ ⌇ 73
│     module      │
└─────────────────┘
         │
┌─────────────────┐
│   Acquisition   │ ⌇ 71
│     module      │
└─────────────────┘
         │
┌─────────────────┐
│ Sending module  │ ⌇ 72
└─────────────────┘
         │
┌─────────────────┐
│Selection module │ ⌇ 74
└─────────────────┘
```

**Figure 10**